(19) **Europäisches Patentamt European Patent Office Office européen des brevets**

(11) **EP 4 715 927 A1**

(12) **EUROPEAN PATENT APPLICATION**

(43) Date of publication:
**25.03.2026 Bulletin 2026/13**

(21) Application number: **24306543.0**

(22) Date of filing: **19.09.2024**

(51) International Patent Classification (IPC):
**H01M 10/0562** *(2010.01)*   **H01M 10/052** *(2010.01)*
**H01B 1/06** *(2006.01)*   **H01M 10/0525** *(2010.01)*

(52) Cooperative Patent Classification (CPC):
**H01M 10/0562; C04B 35/5152; C04B 35/645;
H01B 1/06; H01M 10/052;** C04B 2235/3201;
C04B 2235/3203; C04B 2235/3206;
C04B 2235/3224; C04B 2235/3225;
C04B 2235/3227; C04B 2235/3229;
C04B 2235/3244; C04B 2235/3284;
C04B 2235/3293;   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Saint-Gobain Ceramics & Plastics, Inc
Worcester, MA 01606-008 (US)**

(72) Inventors:
• **DANET, Rémi
93300 Aubervilliers (FR)**

• **ARZAKANTSYAN, Mikayel
92400 Courbevoie (FR)**
• **MARCHANDIER, Thomas
93300 Aubervilliers (FR)**
• **OUSPENSKI, Vladimir
93300 Aubervilliers (FR)**
• **TARDIVAT, Caroline
92400 Courbevoie (FR)**

(74) Representative: **Saint-Gobain Recherche
41 Quai Lucien Lefranc
93300 Aubervilliers (FR)**

(54) **POLYCRYSTALLINE SOLID ELECTROLYTE**

(57)    The present invention relates to a polycrystalline solid electrolyte material of the formula (I) $M_{3-z}(Me^{k+})_f X_{3-z+k*f}$ having at least one of its dimensions that is lower or equal to 100 $\mu$m, and having at least another dimension that is greater than or equal to 1 mm. The invention further concerns an electrolyte tape comprising said polycrystalline solid electrolyte material. Finally, the invention pertains to their preparation process comprising the steps of: disposing a compound of formula (I) or an ammonium complex thereof on a substantially planar surface, heating the compound of formula (I) or the ammonium complex thereof at a temperature ranging from 290 °C to 550 °C, and concomitantly or sequentially to the heating step, applying to the compound of formula (I) a pressure that is orthogonal to the substantially planar surface, said pressure ranging from 1.5 MPa to 30 MPa.

Figure 3

Processed by Luminess, 75001 PARIS (FR)

(52) Cooperative Patent Classification (CPC): (Cont.)
C04B 2235/787; C04B 2235/95; H01M 10/0525;
H01M 2300/0068; H01M 2300/0071;
H01M 2300/008

**Description**

**Technical field**

The present invention belongs to the field of all-solid-state rechargeable batteries (ASSB) and in particular relates to their individual constituents such as a solid electrolyte, in particular in the form of a separator film and a preparation process thereof.

**Technical background**

ASSBs are of particular interest as a substitute to traditional Li-Ion batteries, especially since they raise fewer safety concerns and have higher capacities.

To obtain an ASSB, a solid electrolyte is used instead of the liquid electrolytes found in Li-Ion batteries. The perspective ASSBs also use Li-metal anodes and high energy NMC cathode particles, said particles being incorporated into the solid state electrolyte. The choice of Li-metal anode and high electric potential NMC cathode particles is indispensable in view of obtaining the maximum energy capacity of a rechargeable battery.

Such solid electrolyte is for example chosen from lithium thiophosphate ($\beta$-$Li_3PS_4$, LPS), argyrodite ($Li_6PS_5Cl$) such as described in H.J. Deiseroth, et al. "Li6PS5X: a class of crystalline Li-rich solids with an unusually high Li+ mobility." Angew. Chem. Int. Ed., 47 (2008), pp. 755-758 and halides, for example Li3InCl6, such as described in X. Li et al. "Air-stable Li3InCl6 electrolyte with high voltage compatibility for all-solid-state batteries." Energy Environ. Sci., 2019, 12, pp. 2665-267; Schmidt, M. O. et al. "Zur Kristallstruktur von Li3InCl6." Zeitschrift für Anorg. und Allg. Chemie 1999, 625 (4), 539-540; and G.Meyer, et al. "Handbook on the Physics & Chemistry of Rare Earths", V.28, chapter 177, 2000 Elsevier Sci.

However, the main drawbacks of these compounds are their chemical and electro-chemical interactions with electrode materials or bad adhesion properties with cathode particles forcing to apply strong external pressure on battery stack in the case of sulfide-based electrolyte. The objectives of operation safety and easy recyclability are also putting halide electrolytes in the shortlist of perspective candidates for the industrial use in ASSB application.

Halide solid electrolytes are of particular interest since they display a combination of attractive properties including good ionic conductivity (above 2 mS.cm$^{-1}$), high electro-chemical stability against oxidation at cathode side, good adhesion property with oxide cathode particles (NMC) and a better compactibility (deformability) than other solid-state inorganic electrolytes.

Known processes to obtain a halide solid electrolyte include mixing oxide and carbonate compounds in acid together with ammonium halide. The obtained mixture is then dried to obtain a halide compound complexed with ammonium in the form of coarse dry powder (containing about 1 %wt. of residual moisture). Said powder is then heated to temperatures, for example above 400 °C to obtain a halide solid electrolyte which may then be reduced to a powder form by grinding.

The powder may then be pressed into a desired shape, for example into a disk with a thickness of around a few hundreds of micrometers and a diameter of a few hundreds millimeters, to then be inserted as an electrolyte separator into a cell.

Alternatively, the powder may be placed into a crucible to initiate crystal growth in order to obtain a monocrystalline or polycrystalline bulk from which a thin slice can be machined out. This alternative has the advantage of resulting in a product that has no porosity, which increases the effective transmission surface. Another advantage of this kind of product is that it does not require the formation of a composite product, for example with an organic binder. A further advantage of this method is that the obtained product does not have any grain boundaries, which lessen the ionic conductivity, but rather, in the case of a polycrystalline product, boundaries between crystallites. The latter have a much less important impact on the ionic conductivity of the product.

However, this "crystal growth route" is not adapted for industrial production of solid-state electrolytes separators as it is costly and a non-continuous process, while known industrial process usually involve a so-called "roll-to-roll" calendering process wherein the layers constituting a cell are coated and/or deposited onto a thin film that then goes through calender rolls.

Such a continuous process makes the powder described above more suited to industrial application than an electrolyte crystal. Strategies have been developed to be able to obtain self-standing thin films with controlled dimensions from such a powder, such as using an organic binder and/or using a heated press to from a solid block. However, as noted above, a product obtained from a powder displays considerable drawbacks in comparison to a crystalline product.

**Summary of the invention**

Technical problem

The invention thus offers to solve the technical problem of providing a polycrystalline product that is readily implemented into an industrial process, in particular a continuous process such as a roll-to-roll process.

The product of the invention is of particular interest because it may be formed on-line as a self-standing halide solid electrolyte, in particular in the form of an electrolyte tape, by the thermal treatment of non-hygroscopic precursor material.

The invention therefore also consists of a process that is easily scalable in order to obtain halide solid electrolyte continuous manufacturing as required for the solid-state battery industry.

Solution to the technical problem

The inventors surprisingly obtained, in particular from non-hygroscopic precursors, a consolidated preferentially oriented thin film of halide solid electrolyte (HSE). Said HSE displays a 1-D crystalline organization with a needle-like growth habit and negligible dangling bonds, which allows to form a free-standing preferentially oriented and cracks-free columnar film that is readily implemented, for example as a separator, in an ASSB.

Thus, according to a first aspect, the invention relates to a polycrystalline solid electrolyte material of the formula

$$M_{3-z}(Me^{k+})_f X_{3-z+k*f} \qquad (I)$$

wherein $-3 \leq z < 3$, $2 \leq k < 6$, $0 < f \leq 1$;

- M comprises an alkali metal element, in particular including Li;
- Me comprises a divalent, trivalent, tetravalent, pentavalent or hexavalent metal element or any combination thereof, in particular chosen from:

  - alkaline earth metals, including Ba, Mg, Ca, Sr,
  - rare earth elements such as Ce, Y, Gd, Er, La, Yb and their combinations,
  - a 3d transition metal such as Zn, Cu, V, and
  - an element chosen from Zr, Ti, Sn, Th, Ge, Ta, Nb, Mo, W, Sb, Te, In, Bi, Al, Ga, Fe, and
  - any combination thereof, and

- X is a halogen, in particular chosen from Cl, Br, I and any combination thereof;

having at least one of its dimensions that is lower or equal to 100 $\mu$m, in particular lower or equal to 50 $\mu$m, and preferably lower or equal to 20 $\mu$m, and having at least another dimension that is greater than or equal to 1 mm, in particular greater than or equal to 1 cm and preferably greater than or equal to 10 cm.

According to a second aspect, the present invention also concerns an electrolyte tape comprising a polycrystalline solid electrolyte material according to the invention.

According to a third aspect, the invention further pertains to a preparation process of a polycrystalline solid electrolyte material or an electrolyte tape according to any of the preceding claims, comprising the following steps:

- disposing a compound of formula (I) as defined in the previous claims or an ammonium complex thereof on a substantially planar surface,
- heating the compound of formula (I) or the ammonium complex thereof at a temperature ranging from 290 °C to 550 °C, in particular from 300 °C to 530 °C and preferably from 320 °C to 480 °C, and
- concomitantly or sequentially to the heating step, applying to the compound of formula (I) a pressure that is orthogonal to the substantially planar surface, said pressure ranging from 1.5 MPa to 30 MPa.

Advantages of the invention

As demonstrated herein after, the present invention allows to obtain a self-standing polycrystalline halide solid electrolyte material of controlled dimensions.

In particular, the polycrystalline halide solid electrolyte material according to the invention yields ionic conductivities previously unreachable at the industrial scale, i.e. in a product that is readily implemented in an industrial process, preferably in a roll-to-roll process.

In particular, these ionic conductivities can be reached thanks to the polycrystalline nature of the material according to the invention and preferably from the preferred orientation of the crystallites along one crystallographic direction.

## Brief description of drawings

Fig. 1 represents an X-rays diffractogram of a $Li_3YBr_6$ tape according to the invention.
Fig. 2 represents the Rietveld refinement of an X-rays diffractogram of a $Li_3YBr_6$ powder.
Fig. 3 represents the Rietveld refinement of an X-rays diffractogram of a $Li_3YBr_6$ tape according to the invention.

## Detailed description of embodiments

Halide solid electrolytes

The invention pertains to a polycrystalline solid electrolyte of the formula:

$$M_{3-z}(Me^{k+})_f X_{3-z+k*f}$$

wherein $-3 \leq z < 3$,
k is the valence of Me and $2 \leq k < 6$, $0 < f \leq 1$;

a. M comprises an alkali metal element, in particular including Li;
b. Me comprises a divalent, trivalent, tetravalent, pentavalent or hexavalent metal element or any combination thereof, in particular chosen from:

i. alkaline earth metals, including Ba, Mg, Ca, Sr,
ii. rare earth elements such as Ce, Gd, Er, La, Yb and their combinations,
iii. a 3d transition metal such as Zn, Cu, V, and
iv. an element chosen from Zr, Ti, Sn, Th, Ge, Ta, Nb, Mo, W, Sb, Te, In Bi, Al, Ga, Fe and
v. any combination thereof, and

c. X is a halogen, in particular chosen from Cl, Br, I and any combination thereof.

In a particular embodiment, Me comprises more than one metal element. Then k may be the average of the total of the valence of each metal element. For example, Me includes a trivalent element, such as Y and may further include a tetravalent element in equal molar quantity. In that case, k=(3+4)/2=3.5. In particular, k may be 2, for example when Me is only Y, 3, 4 or 5.

It is understood that atomic vacancy can be present inside the unit cell of the halide solid electrolyte. In this case, atomic vacancy can be noted in the formula of the solid halide electrolyte as $M_{3-z}(Me^{k+})_{f \cdot y} X_{3-z+k*f}$ wherein • represents atomic vacancy inside the unit cell and y is the number of vacant atomic positions. In a particular embodiment, y can be r(k-1).

In a particular embodiment, M can include Li as well as Na, K, Rb, Cs, or any combination thereof. For example, M can include Li and at least one of K and Na, or a combination thereof. In still another example, M can consist of Li and at least one of Cs and Rb. In another example, M can consist of Li and of at least one of Na and Cs.

In a preferred embodiment, M consists of Li.

In a particular embodiment, Me can include an alkaline earth metal element, a rare earth element, a 3d transition metal, an element chosen from Zr, Ti, Sn, Th, Ge, Ta, Nb, Mo, W, Sb, Te, In, Bi, Al, Ga, Fe and any combination thereof. For example, Me can include an alkaline earth metal including Ba, Mg, Ca and Sr, or any combination thereof. In another example, Me can include a rare earth element, in particular Me can consist of at least one rare earth element. The rare earth element may be chosen from Y, Ce, Gd, Er, La, Yb and their combinations. In a further example, Me can include a 3d transition metal, in particular chosen from Zn, Cu, V and any combination thereof.

In a preferred embodiment, Me consists of Y or a combination of Y and In, k is 3 and f is 1. Preferably Me is a combination of Y and In.

In a particular embodiment, X can include a halogen, in particular chosen from Cl, Br, I and any combination thereof. In an example, X can include at least one of Cl and Br. Preferably, X can consist of Cl, Br or any combination thereof.

In a particular embodiment, X represents $Cl_{6-y}Br_y$ wherein $0 < y < 6$, in particular $1 \leq y \leq 5$ and preferably $1 \leq y \leq 3$.

In a particular embodiment, the halide solid electrolyte can be represented by $Li_{3-z}Me^{k+}X_{3-z+k}$. When z is not 0, the complex metal halide can be non-stoichiometric. When z is 0, the complex metal halide can be stoichiometric. For example, $-0.95 \leq z \leq 0.95$. In another example, Me includes Y as well as Gd, Yb, In, Sc, Zn, Mg, Ca, Ba, Sn or a combination thereof, and X is Cl, Br or a combination thereof.

In a preferred embodiment, z is 0.

In a particular embodiment, the solid halide electrolyte can be represented by $Li_3MeBr_6$. In another particular embodiment, the solid halide electrolyte can be represented by $Li_3MeCl_6$. In these embodiments, Me can comprise Y and, optionally at least one of the above-mentioned metal elements, having a valence of 3. Me can comprise Y and include at least one of the above-mentioned metal elements, wherein the average valence of the at least one metal element is 3.

In another particular embodiment, the solid halide electrolyte can consist of Li, Y, and at least one of Cl and Br. For example, the solid halide electrolyte can consist of Li, Y and Cl. In another example, the solid halide electrolyte can consist of Li, Y and Br. In still another example, the solid halide electrolyte can consist of Li, Y, Cl and Br. In another particular embodiment, the solid halide electrolyte can consist of Li, In, and at least one of Cl and Br. For example, the solid halide electrolyte can consist of Li, In and Cl. In another example, the solid halide electrolyte can consist of Li, In and Br. In still another example, the solid halide electrolyte can consist of Li, In, Cl and Br. In another particular embodiment, the solid halide electrolyte can consist of Li, In, Y and at least one of Cl and Br. For example, the solid halide electrolyte can consist of Li, In, Y and Cl. In another example, the solid halide electrolyte can consist of Li, In, Y and Br. In still another example, the solid halide electrolyte can consist of Li, Y, In, Cl and Br. In a particular example, the solid halide electrolyte can be represented by $Li_{3x}Y_{1-x}Cl_6$, $Li_{3x}Y_{1-x}Br_6$, $Li_{3x}In_{1-x}Cl_6$, $Li_{3x}In_{1-x}Br_6$, $Li_3Y_{1-x}In_xCl_6$ or $Li_3Y_{1-x}In_xBr_6$, wherein $0<x\leq0.5$, or represented by $Li_{3x}Y_{1-x}Cl_{6-y}Br_y$, $Li_{3x}In_{1-x}Cl_{6-y}Br_y$ or $Li_3Y_{1-x}In_xCl_{6-y}Br_y$ wherein $0<x<0.5$ and $1.0<y<3.0$.

The solid halide electrolyte may be chosen from $Li_3YCl_6$, $Li_3YBr_6$, $Li_{2.7}Y_{0.7}Zr_{0.3}Cl_6$, $Li_{2.8}Y_{0.8}Sn_{0.2}Cl_6$, $Li_{3.2}Y_{0.8}Zn_{0.2}Cl_6$, $Li_{3.2}Y_{0.8}Mg_{0.2}Cl_6$, $Li_3Y_{1/3}Zr_{1/3}Mg_{1/3}Cl_6$, $Li_3Y_{1/3}Sn_{1/3}Mg_{1/3}Cl_6$, $Li_3Y_{1/3}Zr_{1/3}Zn_{1/3}Cl_6$, $Li_{2.95}Na_{0.05}YBr_6$, $Li_{2.95}K_{0.05}YBr_6$, $Li_{2.95}Cs_{0.05}YBr_6$, $Li_3Y_{0.7}Gd_{0.3}Br_6$, $Li_3Y_{0.8}Yb_{0.2}Br_6$, $Li_3Y_{0.9}La_{0.1}Br_6$, $Li_{2.9}Y_{0.9}Ce_{0.1}Br_6$, $Li_3In_{0.5}Y_{0.5}Cl_6$, $Li_3Y_{1-x}In_x(Cl,Br)_6$ such as $Li_3Y_{0.985}In_{0.015}Cl_4Br_2$ or $Li_3Y(Cl,Br)_6$ such as $Li_3YCl_4Br_2$.

The polycrystalline solid electrolyte material according to the invention has at least one of its dimensions that is lower or equal to 100 $\mu$m, in particular lower or equal to 50 $\mu$m, and preferably lower or equal to 20 $\mu$m, and having at least another dimension that is greater than or equal to 1 mm, in particular greater than or equal to 1 cm and preferably greater than or equal to 10 cm.

In other words, the material according to the invention is obtained in the form of a film, that may have a thickness that is lower or equal to 100 $\mu$m, in particular lower or equal to 50 $\mu$m, and preferably lower or equal to 20 $\mu$m.

Preferably, the thickness of the material according to the invention may range from 10 $\mu$m to 20 $\mu$m.

Such a thickness may be obtained during a process according to the invention by applying an orthogonal pressure to the heated compound of formula (I) as described below. This pressure was not found to adversely impact the properties of the material according to the invention.

To the knowledge of the inventors, polycrystalline halide solid electrolyte films having such a thickness have not been previously described as they could only be obtained through a process according to the invention.

Said film may further have a length that is greater than or equal to 1 mm, in particular greater than or equal to 1 cm and preferably greater than or equal to 10 cm.

Such a length is representative of a material obtained from a continuous process.

In a preferred embodiment, the polycrystalline solid electrolyte material is constituted of crystallites that are, for at least 70 % of them, in particular at least 75 % of them, and preferably at least 80 % of them, oriented in substantially the same direction.

The preferred orientation of the crystallites is assessed according to the March-Dollase approach (Correction of Intensities for Preferred Orientation in Powder Diffractometry: Application of the March Model, W. A. Dollase, J. Appl. Cryst. (1986). 19, 267-272), notably as presented in Determination of the degree of preferred orientation within the March-Dollase approach, E. Zolotoyabko, J. Appl. Cryst. (2009). 42, 513-516.

In summary, the March-Dollase approach consists in correcting the intensity of an oriented powder diffractogram by a factor W such that:

$$W = (r^2cos^2\alpha + \frac{1}{r}sin^2\alpha)^{-3/2}$$

wherein $\alpha$ is the angle between the direction of the preferential orientation and the reciprocal lattice and r is the March factor (or March coefficient, as referred to in Preferred orientation in Debye-Scherrer geometry: interpretation of the March coefficient, C.J. Howard and E.H. Kisi, J. Appl. Cryst. (2000). 33, 1434-1435). The March factor is inversely proportional to the preferred orientation of crystallite, in other words said factor decreases towards 0 as the proportion of oriented crystallites increases.

In a preferred embodiment, the material according to the invention has a March factor lower or equal to 0.4, notably lower or equal to 0.3 and in particular lower or equal to 0.25.

As demonstrated in the examples below, this preferred orientation of the crystallites results in a higher ionic conductivity than otherwise similar anisotropic halide solid electrolytes.

In a preferred embodiment, the crystallites are oriented according to the c-axis of the crystallographic direction.

Electrolyte tape

The present invention further pertains to an electrolyte tape comprising a polycrystalline solid electrolyte material according to the invention.

Such a tape is of significant interest in the battery industry as it is readily implemented into an all-solid-state-battery (ASSB).

The present invention allows to continuously produce at the industrial scale a tape according to the invention, comprising a polycrystalline material, in particular through a continuous process such as a roll-to-roll process.

In a preferred embodiment, the tape is constituted of the polycrystalline solid electrolyte material according to the invention.

By contrast with the products and processes known from the prior art, the present invention does not require the addition of an organic binder to obtain a tape that is suitable for implementation in an ASSB.

Preparation process

The present invention further relates to a preparation process of a polycrystalline solid electrolyte material or of an electrolyte tape according to the invention.

A process according to the invention may readily be applied either starting from a compound of formula (I) or from an ammonium complex (also called herein "precursor") thereof.

In a preferred embodiment, when the process according to the invention is carried out on precursors of a compound of formula (I), it further includes steps of providing said precursors.

In this embodiment, a process according to the invention further includes the preliminary steps of:

- providing compounds of formulae $M_2CO_3$ and $Me_2O_3$ in a solution of HX and $NH_4X$, wherein M, Me and X are as defined herein,
- drying the solution to obtain an ammonium complex of a compound of formula (I),
- disposing the said ammonium complex on a substantially planar surface, and
- initiating a heating step as defined below to form the compound of formula (I).

In a process according to the invention, the compound of formula (I) or ammonium complex thereof is placed on a substantially planar surface.

In a preferred embodiment, the substantially planar surface is made of a material selected from the group comprising carbon-containing material such as graphite, preferably with pyrolytic coating, graphene, glassy carbon; quartz; sapphire; silicon and garnet compounds, in particular the substantially planar surface is made of graphene.

These surfaces are advantageous in that they do not adhere to the material according to the invention which is thus easily recovered.

In a preferred embodiment, the substantially planar surface is an element of an all-solid-state battery. Said element may be an electrode (anode, cathode), an electrolyte layer, or any intermediate layer or coating separating them.

A process according to the invention comprises a heating step wherein the compound of formula (I) as described herein, or an ammonium complex thereof, is heated at a temperature ranging from 290 °C to 550 °C, in particular from 300 °C to 530 °C and preferably from 320 °C to 480 °C.

During the heating step, when it is undergone by an ammonium complex of a compound of formula (I), the first physical phenomenon to occur may be the decomposition and elimination of ammonium halide and any other agent through vaporization, to obtain the compound of formula (I).

Once a compound of formula (I) undergoes the heating step, it melts and then crystallizes upon cooling to form a thin halide film.

For industrial implementation of a process according to the invention, this step may be carried locally, for example on a conveyor belt, in a manner similar to zone melting technique for crystal growth. That is to say that the heating step may require selective heating.

In a preferred embodiment, heating the compound of formula (I) or an ammonium complex thereof is selectively performed with laser heating, infrared heating, resistive heating or inductive heating.

Concomitantly or sequentially to the heating step, a process according to the invention comprises a step of applying to the compound of formula (I) a pressure that is orthogonal to the substantially planar surface, said pressure ranging from 1.5 MPa to 30 MPa.

Applying such a pressure allows, thanks to the plastic deformation properties of the halide solid electrolytes of formula (I), to reach the required thickness for a material according to the invention.

The inventors observed that applying such a pressure did not adversely affect the properties of the material according to the invention.

**Examples**

A dried powder of $Li_3YBr_6$ complexed by $NH_{4+}$ is spread on a quartz flat surface and covered by a quartz block, exerting a pressure of about 1 kPa and heated at 560 °C in an oven for 1 hour before being allowed to cool down at ambient temperature.

A crystallized thin film was obtained and then sampled for XRD analysis.

XRD analysis was carried on with a Cu ($K\alpha = 1.54060$ nm) source in a Bruker D2 Phaser diffractometer.

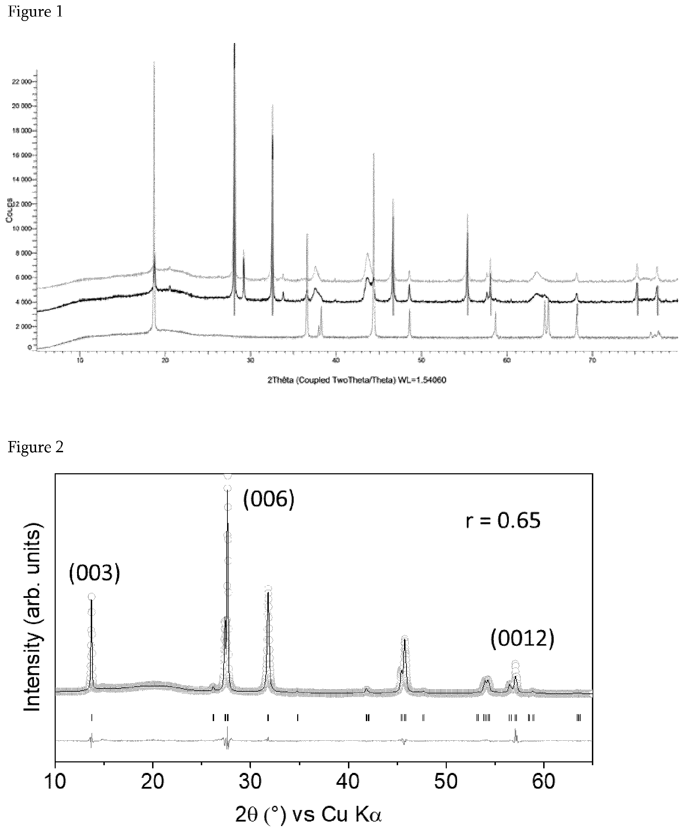

The Figure 1 shows the obtained diffractogram.

This demonstrates that the obtained tape is purely constituted of $Li_3YBr_6$.

Using the obtained diffractogram, we can obtain the Rietveld refinement presented in Figures 2 (for a comparative $Li_3YBr_6$ powder) and 3 (for the $Li_3YBr_6$ tape previously obtained).

According to the March-Dollase approach as presented above, it is possible to obtain the r (or March factor) values for both diffractograms, as displayed in both Figures.

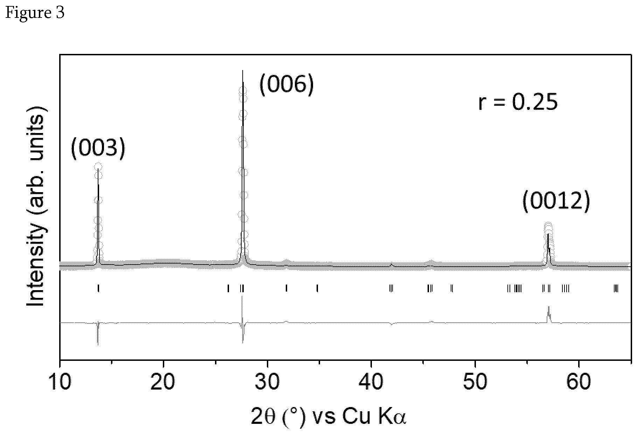

Thus, the obtained March factor of 0.25 for the $Li_3YBr_6$ tape according to the invention is correlated to a preferred orientation of about 75 %. The observed planes of diffraction ((003), (006) and (0012)) on the Rietveld refinement of Figure 3 demonstrate that this preferred orientation is along the c-axis of the crystallographic space.

As a comparison, Figure 2 shows the March factor for a $Li_3YBr_6$ powder, which is of 0.65, i.e. about 35 % of preferred orientation.

It is thus demonstrated that the polycrystalline solid electrolyte according to the invention presents a high preferential orientation, in particular when compared to the same material in powder form.

A sample was extracted from the previously obtained thin film, as well as from the comparative powder to undergo ionic conductivity analysis.

A quantity of material of approximately 100 mg was introduced into a polyetherimide (PEI) cylinder of 8 mm in diameter, then pressed between two stainless steel plungers to a pressure of 150 MPa for the thin film sample or 450 MPa for the comparative powder sample. The pressure was maintained, and each piston connected to the terminals of a potentiostat. Ionic resistance measurements were performed by electrochemical impedance spectroscopy (EIS) at OCV, applying excitation amplitude of 50 mV in a frequency range between 7 MHz and 1 Hz with 15 points per decade with an MTZ impedance analyzer (BioLogic). At the end of the measurement, the pressure was reduced to 0 with both pistons removed. Inside the PEI cylinder, the powder had taken the form of a dense pellet the thickness of which was measured. The thickness of the film was also measured. Using the resistance, thickness and surface area of the material, the ionic conductivity of the materials was then calculated. It was found that the film according to the invention had an ionic conductivity of 3.24 mS.cm$^{-1}$ while the comparative powder had an ionic conductivity of 1.4 mS.cm$^{-1}$.

For a material of the same formula (I), a material according to the invention, i.e. of the specified dimensions and being polycrystalline, has an ionic conductivity that is twice higher than its ionic conductivity obtained from a powder form.

Without being bound to any specific theory, the inventors are of the opinion that the preferred orientation obtained for a polycrystalline material according to the invention diminishes the impact of grain boundaries on ionic conductivity.

**Claims**

1. A polycrystalline solid electrolyte material of the formula

$$M_{3-z}(Me^{k+})_f X_{3-z+k*f} \qquad (I)$$

wherein $-3 \leq z < 3$, $2 \leq k < 6$, $0 < f \leq 1$;

- M comprises an alkali metal element, in particular including Li;
- Me comprises a divalent, trivalent, tetravalent, pentavalent or hexavalent metal element or any combination thereof, in particular chosen from:

- alkaline earth metals, including Ba, Mg, Ca, Sr,
- rare earth elements such as Ce, Y, Gd, Er, La, Yb and their combinations,
- a 3d transition metal such as Zn, Cu, V, and
- an element chosen from Zr, Ti, Sn, Th, Ge, Ta, Nb, Mo, W, Sb, Te, In, Bi, Al, Ga, Fe and
- any combination thereof, and

- X is a halogen, in particular chosen from Cl, Br, I and any combination

thereof;

having at least one of its dimensions that is lower or equal to 100 $\mu$m, in particular lower or equal to 50 $\mu$m, and preferably lower or equal to 20 $\mu$m, and having at least another dimension that is greater than or equal to 1 mm, in particular greater than or equal to 1 cm and preferably greater than or equal to 10 cm.

2. The material according to any of the preceding claims, wherein the polycrystalline solid electrolyte material is constituted of crystallites that are, for at least 70 % of them, in particular at least 75 % of them, and preferably at least 80 % of them, oriented in substantially the same direction.

3. The material according to the preceding claim, wherein the crystallites are oriented according to the c-axis of the crystallographic direction.

4. The material according to any of the preceding claims, wherein the polycrystalline solid electrolyte material is chosen from $Li_3YCl_6$, $Li_3YBr_6$, $Li_{2.7}Y_{0.7}Zr_{0.3}Cl_6$, $Li_{2.8}Y_{0.8}Sn_{0.2}Cl_6$, $Li_{3.2}Yn_{0.2}Cl_6$, $Li_{3.2}Y_{0.8}Mg_{0.2}Cl_6$, $Li_3Y_{1/3}Zr_{1/3}Mg_{1/3}Cl_6$, $Li_3Y_{1/3}Sn_{1/3}Mg_{1/3}Cl_6$, $Li_3Y_{1/3}Zr_{1/3}Zn_{1/3}Cl_6$, $Li_{2.95}Na_{0.05}YBr_6$, $Li_{2.95}K_{0.05}YBr_6$, $Li_{2.95}Cs_{0.05}YBr_6$, $Li_3Y_{0.7}Gd_{0.3}Br_6$, $Li_3Y_{0.8}Yb_{0.2}Br_6$, $Li_3Y_{0.9}La_{0.1}Br_6$, $Li_{2.9}Y_{0.9}Ce_{0.1}Br_6$, $Li_3In_{0.5}Y_{0.5}Cl_6$, $Li_3Y_{1-x}In_x(Cl,Br)_6$ such as $Li_3Y_{0.985}In_{0.015}Cl_4Br_2$, or $Li_3Y(Cl,Br)_6$ such as $Li_3YCl_4Br_2$.

5. An electrolyte tape comprising a polycrystalline solid electrolyte material according to any of the preceding claims.

6. The electrolyte tape according to the preceding claim, wherein the tape is constituted of the polycrystalline solid electrolyte material according to any of claims 1 to 5.

7. A preparation process of a polycrystalline solid electrolyte material or an electrolyte tape according to any of the preceding claims, comprising the following steps:

- disposing a compound of formula (I) as defined in the previous claims or an ammonium complex thereof on a substantially planar surface,
- heating the compound of formula (I) or the ammonium complex thereof at a temperature ranging from 290 °C to 550 °C, in particular from 300 °C to 530 °C and preferably from 320 °C to 480 °C, and
- concomitantly or sequentially to the heating step, applying to the compound of formula (I) a pressure that is orthogonal to the substantially planar surface, said pressure ranging from 1.5 MPa to 30 MPa.

8. The preparation process according to the preceding claim, further including the preliminary steps of:

- providing compounds of formulae $M_2CO_3$ and $Me_2O_3$ in a solution of HX and $NH_4X$, wherein M, Me and X are as defined in the previous claims,
- drying the solution to obtain an ammonium complex of a compound of formula (I),
- disposing the said ammonium complex on a substantially planar surface, and
- initiating a heating step as defined in the previous claim to form the compound of formula (I).

9. The preparation process according to the preceding claim, wherein the substantially planar surface is made of a material selected from the group comprising carbon-containing material such as graphite, preferably with pyrolytic coating, graphene, glassy carbon; quartz; sapphire; silicon and garnet compounds, in particular the substantially planar surface is made of graphene.

10. The preparation process according to any of claims 7 to 9, wherein heating the compound of formula (I) or an ammonium complex thereof is selectively performed with laser heating, infrared heating, resistive heating or inductive heating.

Figure 1

Figure 2

Figure 3

Europäisches
Patentamt

European
Patent Office

Office européen
des brevets

# EUROPEAN SEARCH REPORT

**Application Number**

EP 24 30 6543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/263126 A1 (OUSPENSKI VLADIMIRÈ [FR] ET AL) 18 August 2022 (2022-08-18)<br>* paragraph [0022] *<br>* paragraph [0028] *<br>* paragraph [0044] - paragraph [0045] *<br>* paragraph [0063] *<br>* paragraph [0050] *<br>* paragraph [0075] *<br>* paragraph [0096] *<br>* paragraph [0106] - paragraph [0107] *<br>* paragraph [0125] *<br>* paragraph [0326] *<br>* example 5 *<br>* figure 4 * | 1-10 | INV.<br>H01M10/0562<br>H01M10/052<br>H01B1/06<br>H01M10/0525 |
| A | CN 111 900 462 A (CHINA AUTOMOTIVE BATTERY RES INST CO LTD ET AL.)<br>6 November 2020 (2020-11-06)<br>* examples 1,2 *<br>* figure 2 * | 1-10 | |
| A | EP 4 391 114 A1 (SAINT GOBAIN CERAMICS [US]) 26 June 2024 (2024-06-26)<br>* paragraph [0001] *<br>* paragraph [0044] * | 1-8 | **TECHNICAL FIELDS SEARCHED (IPC)**<br><br>H01M |

The present search report has been drawn up for all claims

| Place of search | Date of completion of the search | Examiner |
|---|---|---|
| Munich | 10 March 2025 | Kuhn, Tanja |

EPO FORM 1503 03.82 (P04C01)

## ANNEX TO THE EUROPEAN SEARCH REPORT
## ON EUROPEAN PATENT APPLICATION NO.

EP 24 30 6543

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2025

| Patent document cited in search report | | Publication date | Patent family member(s) | | Publication date |
|---|---|---|---|---|---|
| US 2022263126 | A1 | 18-08-2022 | CN | 115362587 A | 18-11-2022 |
| | | | EP | 4104235 A1 | 21-12-2022 |
| | | | JP | 7364804 B2 | 18-10-2023 |
| | | | JP | 2023182743 A | 26-12-2023 |
| | | | JP | 2023512340 A | 24-03-2023 |
| | | | KR | 20220154762 A | 22-11-2022 |
| | | | KR | 20230152805 A | 03-11-2023 |
| | | | US | 2021320327 A1 | 14-10-2021 |
| | | | US | 2022263126 A1 | 18-08-2022 |
| | | | US | 2023261258 A1 | 17-08-2023 |
| | | | WO | 2021211763 A1 | 21-10-2021 |
| CN 111900462 | A | 06-11-2020 | NONE | | |
| EP 4391114 | A1 | 26-06-2024 | EP | 4391114 A1 | 26-06-2024 |
| | | | WO | 2024134583 A1 | 27-06-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.J. DEISEROTH et al.** Li6PS5X: a class of crystalline Li-rich solids with an unusually high Li+ mobility. *Angew. Chem. Int. Ed.*, 2008, vol. 47, 755-758
- **X. LI et al.** Air-stable Li3InCl6 electrolyte with high voltage compatibility for all-solid-state batteries. *Energy Environ. Sci.*, 2019, vol. 12, 2665-267
- **SCHMIDT, M. O. et al.** Zur Kristallstruktur von Li3InCl6.. *Zeitschrift für Anorg. und Allg. Chemie*, 1999, vol. 625 (4), 539-540
- **G.MEYER et al.** Handbook on the Physics & Chemistry of Rare Earths. Elsevier Sci., 2000, vol. 28

- **W. A. DOLLASE**. Correction of Intensities for Preferred Orientation in Powder Diffractometry: Application of the March Model. *J. Appl. Cryst.*, 1986, vol. 19, 267-272
- **E. ZOLOTOYABKO**. Determination of the degree of preferred orientation within the March-Dollase approach. *J. Appl. Cryst.*, 2009, vol. 42, 513-516
- **C.J. HOWARD** ; **E.H. KISI**. March coefficient, as referred to in Preferred orientation in Debye-Scherrer geometry: interpretation of the March coefficient. *J. Appl. Cryst.*, 2000, vol. 33, 1434-1435